# FASCICULE DE BREVET EUROPEEN

(11) **EP 2 558 320 B1**
(45) Date de publication et mention de la délivrance du brevet: **30.05.2018**
(21) Numéro de dépôt: 11731006.0
(22) Date de dépôt: 11.04.2011
(51) Int. Cl.: B60K 17/34, B60K 17/346, B60K 17/35, B60K 23/08, B60T 8/1769, B60T 8/32, B60W 10/02, B60W 10/12, B60W 10/18, B60W 50/08

(54) **SYSTEME DE COMMANDE D'UN ACTIONNEUR DE TRANSFERT DE COUPLE A MODES DE FONCTIONNEMENT MULTIPLES**
SYSTEM UND VERFAHREN ZUM STEUERN EINER DREHMOMENTKUPPLUNG ENTSPRECHEND MEHRERER BETRIEBSARTEN
SYSTEM AND METHOD OF CONTROLLING A TORQUE TRANSFER ACTUATOR IN MULTIPLE FUNCTION MODES

(30) Priorité: 12.04.2010 FR 1052768
(43) Date de publication de la demande: 20.02.2013
(73) Titulaire: Renault S.A.S., 92100 Boulogne-Billancourt (FR)
(72) Inventeur: FORET, Jean-Marie, F-27950 Saint-Marcel (FR); FOUSSARD, François, F-76100 Rouen (FR); GUEGAN, Stéphane, F-78000 Versailles (FR); MONTI, Alessandro, F-92250 La Garenne Colombes (FR)
(86) Numéro de dépôt international: PCT/FR2011/050827
(87) Numéro de publication internationale: WO 2011/128570

(56) Documents cités:
- US-A- 4 770 266
- US-A- 5 249 849
- US-A- 5 612 880
- PFAU W ET AL: "BMW XDRIVE IN DER 3ER- UND 5ER-REIHE DER BMW-ALLRADANTRIEB FUER LIMOUSINE UND TOURING", ATZ AUTOMOBILTECHNISCHE ZEITSCHRIFT, VIEWEG PUBLISHING, WIESBADEN, DE, vol. 107, no. 10, 1 octobre 2005 (2005-10-01), pages 862-871, XP001207766, ISSN: 0001-2785
- CZINCZEL M: "PRINCIPE DE L'ABS", INGENIEURS DE L'AUTOMOBILE, EDITIONS VB, GARCHES, FR, 1 octobre 1987 (1987-10-01), pages 71-75, XP000112267, ISSN: 0020-1200

## Description

La présente invention se situe dans le domaine technique des transmissions pour véhicules automobiles et plus particulièrement dans le domaine de la commande des transmissions de véhicules automobiles.

Les transmissions pour véhicules automobiles comprennent historiquement des transmissions à deux roues motrices pour la majorité des véhicules et des transmissions à quatre roues motrices pour les véhicules tout terrain.

Au delà des spécificités inhérentes à ces différents véhicules, les véhicules à quatre roues motrices présentent une consommation de carburant élevées et de mauvaises performances sur route.

Depuis quelques années, de nouveaux véhicules à transmission intégrale brouillent les limites précédemment établies. Ces véhicules sont caractérisés par un transfert de couple variable entre le train de roues motrices avant et le train de roues motrices arrière.

Un contrôle précis de ce type de transmission permet de concilier performances et sécurité, tant sur route qu'en tout terrain.

Le brevet américain US 5752211 décrit un procédé de commande qui améliore la consommation de carburant en déterminant une valeur de décalage. Cette valeur de décalage varie comme le cube de la vitesse, et est soustraite à la commande de distribution de couple. Ce procédé de commande permet d'améliorer l'écart entre la vitesse du train avant et la vitesse du train arrière lors des phases de roulage quasi statique.

La demande de brevet européen EP 1188597 décrit un procédé de répartition du couple entre les trains avant et arrière en fonction d'une détection de variation de diamètre des pneus due à l'usure ou à un changement.

La demande de brevet européen EP 1275549 décrit un procédé de répartition de couple entre les trains avant et arrière en fonction de différents signaux tels que les vitesses de rotation des roues et la position de la pédale d'accélérateur. Ce procédé améliore les performances du véhicule en améliorant le rapport entre la vitesse du train avant et la vitesse du train arrière mais ne décrit pas de méthode de détermination de la consigne.

Le brevet japonais JP 10119598 décrit un procédé de commande appliqué à un véhicule à quatre roues motrices, dont les roues motrices principales sont situées sur le train arrière. Le système est apte à transférer une partie du couple des roues motrices arrière sur le train de roues avant. Ce transfert est activé lorsque les roues motrices arrière patinent.

Le brevet américain US 5247443 décrit un procédé de répartition du couple entre les trains avant et arrière en fonction de la différence entre les vitesses de rotation des trains avant et arrière. Le procédé modifie également le seuil de détection d'un glissement si un freinage est enclenché. Ce procédé améliore la performance du véhicule en optimisant le glissement mais ne tient pas compte de l'intensité du freinage dans la détermination de la répartition du couple.

La demande de brevet européen EP 1627763 décrit un procédé prenant en compte le freinage dans la répartition du couple entre les trains avant et arrière.

Lorsque le transfert de couple est actif et que l'antiblocage des roues se déclenche, il est possible d'aboutir à une situation où la motricité tout terrain (quatre roues motrices) se désenclenche à l'insu du conducteur. Une telle situation dégrade l'agrément de conduite et peut être dangereuse. Bien que les documents de l'état de l'art décrivent des dispositifs de commande d'un système de transfert de couple, aucun de ces documents ne décrit de dispositif de commande prenant en compte les conditions de fonctionnement du système d'antiblocage des roues lors du freinage (ABS) et du système de transfert de couple (ETC). De tels systèmes sont donc incapables de prendre en charge la situation précédemment décrite.

Il est également connu, par le document US 4,770,266, un système de commande d'un actionneur de transfert de couple qui prévoit le passage à un mode à deux roues motrices lorsque la requête de freinage dépasse une valeur limite, le système prévoyant également des périodes d'activation du moyen de commande d'antiblocage des roues en fonction du mode deux ou quatre roues motrices.

Enfin, le document US 5,612,880 décrit un système selon le préambule de la revendication 1, comprenant un moyen de transfert de couple et un moyen de commande d'antiblocage de roues, avec une interaction entre la consigne de freinage et l'état du système de transfert de couple. Ce document décrit également un procédé selon le préambule de la revendication 7.

L'objet de la présente invention est un procédé de commande d'un actionneur de transfert de couple apte à prendre en compte les conditions de fonctionnement du système d'antiblocage des roues lors du freinage et du système de transfert de couple, ainsi que le niveau de freinage.

Un autre objet de la présente invention est un système de commande d'un actionneur de transfert de couple apte à prendre en compte les conditions de fonctionnement du système d'antiblocage des roues lors du freinage et du système de transfert de couple. Selon l'invention, un système de commande d'un actionneur de transfert de couple pour un véhicule automobile à quatre roues motrices, comprend des moyens de détermination et un système d'antiblocage des roues. Le système de commande comprend un moyen de commande d'antiblocage des roues et un moyen de commande de l'actionneur de transfert de couple, aptes à coopérer afin d'émettre la commande de transfert de couple à destination de l'actionneur de transfert de couple.

Le moyen de commande d'antiblocage des roues est apte à déterminer une commande d'antiblocage des roues en fonction de la commande de transfert de couple reçue du moyen de commande de l'actionneur de transfert de couple,
le moyen de commande de l'actionneur de transfert de couple étant apte à déterminer une commande de transfert de couple en fonction de la commande d'antiblocage des roues.

Le système de commande permet à l'antiblocage des roues et au transfert de couple de coopérer, ce qui permet d'élaborer une consigne de transfert de couple qui n'est pas erronément déterminée à cause d'un déclenchement injustifié de l'antiblocage des roues.

Le système de commande peut comprendre un organe de commande manuelle relié au moyen de commande de l'actionneur de transfert de couple, et
l'organe de commande manuelle pouvant prendre plusieurs positions, et être manipulé par le conducteur du véhicule, et pouvant être apte à émettre un signal selon la position choisie par le conducteur. Selon l'invention, le système de commande comprend un moyen de détermination de la situation de conduite, apte à émettre un signal de commande à destination du commutateur piloté en fonction des signaux reçus des moyens de détermination et de la commande de transfert de couple reçue du moyen de commande de l'actionneur de transfert de couple, et un commutateur piloté apte à émettre un signal de détection d'un blocage des roues.

Le système de commande comprend par ailleurs un premier moyen de détection du blocage des roues et un deuxième moyen de détection du blocage des roues chacun relié à une borne du commutateur commandé, et apte chacun à déterminer l'existence d'un blocage des roues lors du freinage en fonction des signaux des vitesses de rotation de chaque roue reçus des moyens de détermination. Selon l'invention, le système de commande comprend un moyen d'estimation du niveau de freinage étant apte à émettre un signal en fonction du signal de pression dans le circuit de freinage reçu des moyens de détermination,
un opérateur logique de type ET étant apte à émettre une commande d'antiblocage des roues relative à l'état de fonctionnement du moyen de commande d'antiblocage des roues, en fonction des signaux reçus du commutateur commandé et du moyen d'estimation du niveau de freinage.

Le système de commande comprend un moyen de détermination de l'activité du système d'antiblocage des roues apte à déterminer un signal de commande de déclenchement du système d'antiblocage des roues en fonction des signaux reçus des moyens de détermination et de la commande d'antiblocage des roues reçue du moyen de commande d'antiblocage des roues.

Le système de commande peut comprend également un moyen de commande du mode de conduite apte à déterminer le mode de conduite à appliquer à l'actionneur de transfert de couple en fonction de signaux reçus des moyens de détermination et du signal de commande de déclenchement du système d'antiblocage des roues reçu du moyen de détermination de l'activité du système d'antiblocage des roues, le moyen de commande du mode de conduite étant apte à émettre un signal de commande de mode. Conformément à l'invention, le système de commande comprend un moyen de détermination des consignes de couple et un moyen de commutation, le moyen de détermination des consignes de couple étant apte à déterminer les consignes de couples à appliquer à l'actionneur de transfert de couple pour chaque mode de conduite pouvant être sélectionné par le conducteur ainsi que pour un mode de freinage, le moyen de commutation étant apte à émettre une commande de transfert de couple à destination de l'actionneur de transfert de couple en fonction du signal de commande de mode reçu du moyen de commande du mode de conduite et des signaux reçus du moyen de détermination des consignes de couple. Conformément à l'invention, un procédé de commande de transfert de couple pour véhicule automobile à quatre roues motrices avec commande d'antiblocage des roues et commande de transfert de couple, comprend des étapes dans lesquelles :
la commande d'antiblocage des roues dépend de la commande de transfert de couple, et
la commande de transfert de couple dépend de la commande d'antiblocage des roues.

La commande d'antiblocage des roues dépend de la commande de transfert de couple, notamment de la requête de mode de conduite du conducteur, de l'état du système de transfert de couple et du mode de conduite actif dans le système de transfert de couple.

Un signal de détection d'un blocage des roues est déterminé en fonction d'au moins deux modes de détection d'un blocage des roues, et en fonction de la vitesse du véhicule et de la commande de transfert de couple, notamment de la requête de mode de conduite du conducteur, de l'état du système de transfert de couple, du mode de conduite actif dans le système de transfert de couple.

On peut choisir un premier mode de détection du blocage des roues si la requête de mode de conduite du conducteur n'est pas tout terrain, ou si le mode de conduite actif dans le système de transfert de couple n'est pas tout terrain, ou si la vitesse du véhicule est supérieure à une valeur de seuil ou si on détecte une défaillance de l'actionneur de transfert de couple autre qu'une défaillance thermique.

On peut choisir un deuxième mode de détection du blocage des roues si le premier mode de détection du blocage des roues n'a pas été activé, le deuxième mode de détection du blocage des roues présente une sensibilité de détection moins élevée que la sensibilité de détection du premier mode de détection du blocage des roues. Selon l'invention, on détermine un signal de détection d'un freinage si la pression du système de freinage est supérieure à une valeur de seuil,
on détermine la commande d'antiblocage des roues, en fonction du signal de détection d'un blocage des roues et du signal de détection d'un freinage, et
on détermine un signal de commande de déclenchement du système d'antiblocage des roues en fonction de la vitesse du véhicule, de la commande d'antiblocage des roues, de la requête de mode de conduite du conducteur et d'un signal de requête d'un freinage.

On peut déterminer une consigne de transfert de couple en mode deux roues motrices, une consigne de transfert de couple en mode quatre roues motrices, une consigne de transfert de couple en mode quatre roue motrices tout terrain et une consigne de transfert de couple en mode de freinage,
on peut choisir une consigne de transfert de couple en fonction de la vitesse du véhicule, de la requête de mode de conduite du conducteur, de l'enfoncement de la pédale de freinage, de l'activation du frein à main, et d'un signal de commande de déclenchement du système d'antiblocage des roues,et
on peut émettre la commande de transfert de couple en fonction de la consigne de transfert de couple choisie.

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principaux éléments compris dans un système de commande d'un actionneur de transfert de couple ;
- la figure 2 illustre les principaux éléments compris dans le moyen de commande de l'antiblocage des roues lors du freinage ; et
- la figure 3 illustre les principaux éléments compris dans le moyen de commande de l'actionneur de transfert de couple.

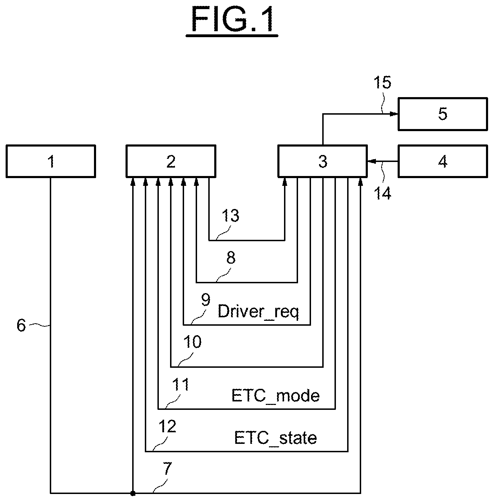

Sur la figure 1, on peut voir un système de commande électronique équipant un véhicule automobile à quatre roues motrices non représenté. Le système de commande illustré comprend des moyens de détermination 1, un moyen de commande 2 d'antiblocage des roues, un moyen de commande 3 de l'actionneur de transfert de couple, un organe de commande manuelle 4 et un actionneur 5 de transfert de couple.

Les moyens de détermination 1 sont reliés au moyen de commande 2 d'antiblocage des roues du véhicule par la connexion 6 et au moyen de commande 3 de l'actionneur de transfert de couple par la connexion 7.

Les moyens de détermination 1 peuvent comprendre des capteurs physiques ou des moyens de calcul aptes à déterminer les grandeurs requises à partir d'un modèle et de données fournies par d'autres capteurs.

Le moyen de commande 2 d'antiblocage des roues est relié en sortie au moyen de commande 3 de l'actionneur de transfert de couple par les connexions 8 à 12 et en entrée par la connexion 13.

L'organe de commande manuelle 4 est relié en sortie au moyen de commande 3 de l'actionneur de transfert de couple par une connexion 14. L'actionneur 5 de transfert de couple est relié en entrée au moyen de commande 3 de l'actionneur de transfert de couple par la connexion 15.

Le moyen de commande 3 de l'actionneur de transfert de couple coopère avec le moyen de commande 2 d'antiblocage des roues afin de déterminer une commande de transfert de couple à destination de l'actionneur 5 de transfert de couple. L'actionneur 5 de transfert de couple assure le transfert sur l'essieu arrière du véhicule de tout ou partie du couple délivré sur l'essieu avant par le moteur de propulsion, par exemple un moteur à combustion interne, un moteur électrique ou un moteur hybride. Plusieurs modes de transfert peuvent être activés. Le mode deux roues motrices (2WD) supprime le transfert de couple de l'essieu avant vers l'essieu arrière. Seules les deux roues avant (dans le cas d'un véhicule à traction) sont motrices.

Le mode quatre roues motrices tout terrain (4WDLock) comprend le transfert de couple de l'essieu avant vers l'essieu arrière de façon que la même valeur de couple soit exercée sur l'essieu avant que sur l'essieu arrière.

Enfin, le mode quatre roues motrices (4WD) comprend le transfert d'une portion du couple de l'essieu avant vers l'essieu arrière. La portion de couple transférée sur l'essieu arrière peut être fixe ou variable et est généralement inférieure au couple transféré dans le mode quatre roues motrices tout terrain (4WDLock).

Les moyens de détermination 1 émettent à destination notamment du moyen de commande 2 d'antiblocage des roues et du moyen de commande 3 de l'actionneur de transfert de couple des signaux relatifs notamment à l'enfoncement de la pédale d'embrayage, du rapport de vitesse engagé, de l'enfoncement de la pédale d'accélérateur, de la vitesse v du véhicule, de la vitesse FRspeed de la roue avant droite du véhicule, de la vitesse FLspeed de la roue avant gauche du véhicule, de la vitesse RRspeed de la roue arrière droite du véhicule, de la vitesse RLspeed de la roue arrière gauche du véhicule, et de la pression P_brk dans le circuit de freinage.

Le moyen de commande 2 d'antiblocage des roues émet à destination du moyen de commande 3 de l'actionneur de transfert de couple une commande d'antiblocage des roues ABS_in_regulation.

Le moyen de commande 3 de l'actionneur de transfert de couple émet à destination du moyen de commande 2 d'antiblocage des roues une commande de transfert de couple comprenant au moins un signal relatif au mode de traction requis par le conducteur Driver_req, un signal relatif au mode de transfert de couple actif ETC_mode, un signal relatif à l'état de l'actionneur ETC_State, et un signal relatif à la consigne de transfert de couple.

Le signal relatif à l'état de fonctionnement de l'actionneur de transfert de couple ETC_State peut prendre plusieurs valeurs, dont notamment la valeur « normal », la valeur « alerte de température élevée », la valeur « défaillance due à une surchauffe » et la valeur « autre défaillance ».

Le signal relatif au mode de traction requis par le conducteur Driver_req et le signal relatif au mode de transfert de couple actif ETC_mode peuvent prendre plusieurs valeurs, dont notamment la valeur « 2 roues motrices » (2WD), la valeur « 4 roues motrices en mode de conduite normal» (4WD) et la valeur « 4 roues motrices en mode de conduite tout terrain » (4WDLock).

D'autres signaux peuvent être émis, comme par exemple, l'estimation du couple transféré, ou une mesure du couple transféré. De plus, les signaux transitant entre plusieurs éléments du dispositif de commande peuvent bénéficier indistinctement d'une connexion filaire individuelle, faire l'objet d'un multiplexage ou d'un transport par bus de données. Ces modes de connexion ne sont donnés qu'à titre d'exemple nullement limitatif.

L'organe de commande manuelle 4 qui peut être actionné directement par le conducteur du véhicule émet à destination du moyen de commande 3 de l'actionneur de transfert de couple au moins un signal relatif à la sélection d'un mode de traction par le conducteur. Les modes de traction parmi lesquels la sélection peut être faite comprend notamment un mode deux roues motrices (2WD), un mode quatre roues motrices (4WD), et un mode quatre roues motrices tout terrain (4WDLock).

Le mode quatre roues motrices tout terrain (4WDLock) se distingue du mode quatre roues motrices (4WD) par le fait qu'il est sélectionné par le conducteur pour signifier son intention d'utiliser le véhicule en mode tout terrain pour le franchissement d'obstacles ou pour le franchissement d'un terrain accidenté. Cela implique qu'un blocage des roues peut intervenir sans qu'une anomalie de roulage ne se soit produite.

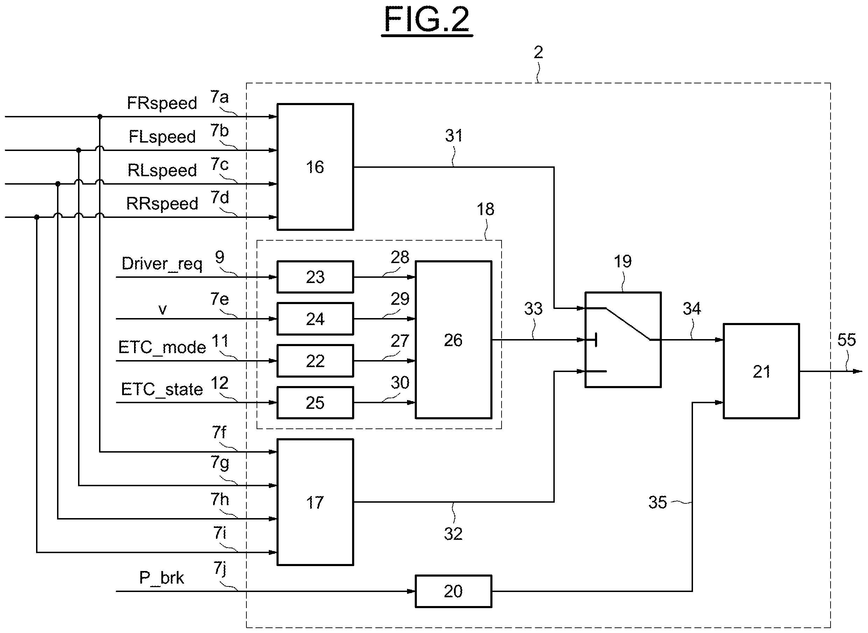

Sur la figure 2, on peut voir les éléments inclus dans le moyen de commande 2 d'antiblocage des roues.

Le moyen de commande 2 d'antiblocage des roues comprend un premier moyen 16 de détection du blocage des roues, un deuxième moyen 17 de détection du blocage des roues, un moyen de détermination 18 de la situation de conduite, un commutateur commandé 19, un moyen d'estimation 20 du niveau de freinage, et un opérateur logique 21 de type ET.

Le premier moyen 16 de détection du blocage des roues reçoit en entrée la vitesse FRspeed de la roue avant droite du véhicule, la vitesse FLspeed de la roue avant gauche du véhicule, la vitesse RLspeed de la roue arrière gauche du véhicule et la vitesse RRspeed de la roue arrière droite du véhicule en provenance des moyens de détermination 1 par des connexions 7a, 7b, 7c et 7d.

Le deuxième moyen 17 de détection du blocage des roues reçoit également en entrée la vitesse FRspeed de la roue avant droite du véhicule, la vitesse FLspeed de la roue avant gauche du véhicule, la vitesse RLspeed de la roue arrière gauche du véhicule et la vitesse RRspeed de la roue arrière droite du véhicule en provenance des moyens de détermination 1 par des connexions 7f, 7g, 7h et 7i.

Le moyen de détermination 18 de la situation de conduite reçoit en entrée la vitesse du véhicule v provenant des moyens de détermination 1 par une connexion 7e, et reçoit par ailleurs du moyen de commande 3 de l'actionneur de transfert de couple une commande de transfert de couple comprenant un signal relatif au mode de traction requis par le conducteur Driver_req par la connexion 9, un signal relatif au mode de transfert de couple actif ETC_mode par la connexion 11, et un signal relatif à l'état de l'actionneur de transfert de couple ETC_state par la connexion 12.

Le premier moyen 16 de détection du blocage des roues et le deuxième moyen 17 de détection du blocage des roues sont reliés en entrée du commutateur piloté 19 par les connexions 31 et 32 respectivement. Le commutateur piloté 19 est relié par sa borne de commande, au moyen de détermination 18 de la situation de conduite par la connexion 33.

Le moyen de détermination 18 de la situation de conduite comprend lui-même un moyen de détermination 22 du mode de conduite actif, un moyen de détermination 23 du mode de conduite requis par le conducteur, un moyen de comparaison 24 de la vitesse du véhicule à une vitesse de seuil, un moyen de détermination 25 d'une défaillance de l'actionneur de transfert de couple et un opérateur logique 26 de type OU. Le moyen de détermination 22 du mode de conduite actif, le moyen de détermination 23 du mode de conduite requis par le conducteur, le moyen de comparaison 24 de la vitesse du véhicule à une vitesse de seuil et le moyen de détermination 25 d'une défaillance de l'actionneur de transfert de couple sont reliés à l'opérateur logique 26 de type OU par les liaisons 27, 28, 29 et 30 respectivement. L'opérateur logique 26 de type OU partage sa sortie avec la sortie du moyen de détermination 18 de la situation de conduite.

La sortie du commutateur piloté 19 est reliée à une entrée de l'opérateur logique 21 de type ET par la connexion 34.

Le moyen d'estimation 20 du niveau de freinage reçoit en entrée la pression P_brk dans le système de freinage par la connexion 7j provenant des moyens de détermination 1. En outre, le moyen d'estimation 20 du niveau de freinage est relié en sortie à l'opérateur logique 21 de type ET par la connexion 35. L'opérateur logique 21 de type ET partage sa sortie 55 avec celle du moyen de commande 2 d'antiblocage des roues.

Le premier moyen 16 de détection d'un blocage des roues est adapté à une détection du blocage des roues lorsque le véhicule n'est pas dans un mode tout terrain. Par contre, le deuxième moyen 17 de détection d'un blocage des roues est adapté à une détection du blocage des roues lorsque le véhicule est dans un mode tout terrain. Parmi les modes de conduite précédemment décrits, le mode deux roues motrices (2WD) et le mode quatre roues motrices (4WD) ne sont pas des modes tout terrain tandis que le mode quatre roues motrices tout terrain (4WDLock) est un mode tout terrain. Le premier moyen 16 de détection d'un blocage des roues et le deuxième moyen 17 de détection d'un blocage des roues diffèrent l'un de l'autre par des conditions d'activation moins strictes du deuxième moyen 17 de détection.

Le premier moyen 16 de détection d'un blocage des roues et le deuxième moyen 17 de détection d'un blocage des roues sont actifs en parallèle. Le moyen de détermination 18 de la situation de conduite est capable de déterminer quelle condition d'activation du système d'antiblocage des roues il convient d'appliquer parmi celle du premier moyen 16 de détection et celle du deuxième moyen 17 de détection.

Le moyen de détermination 22 du mode de conduite actif compare la valeur portée par le signal reçu ETC_mode du moyen de commande 3 de l'actionneur de transfert de couple à une valeur mémorisée caractéristique du fonctionnement à quatre roues motrices en mode tout terrain (4WDLock). Si les deux valeurs sont les mêmes, le moyen de détermination 22 du mode de conduite actif émet en sortie une valeur logique « faux », sinon une valeur logique « vrai » est émise.

Le moyen de détermination 23 du mode de conduite requis par le conducteur compare la valeur portée par le signal reçu Driver_req du moyen de commande 3 de l'actionneur de transfert de couple à une valeur mémorisée caractéristique du fonctionnement à quatre roues motrices en mode tout terrain (4WDLock). Si les deux valeurs sont les mêmes, le moyen de détermination 23 du mode de conduite requis par le conducteur émet en sortie une valeur logique « faux », sinon une valeur logique « vrai » est émise.

Le moyen de comparaison 24 compare la valeur portée par le signal reçu v des moyens de détermination 1 à une vitesse de seuil mémorisée et émet en sortie une valeur logique « vrai » si la valeur v est supérieure à la vitesse de seuil mémorisée, sinon une valeur logique « faux » est émise.

Le moyen de détermination 25 d'une défaillance de l'actionneur de transfert de couple compare la valeur portée par le signal reçu ETC_state du moyen de commande 3 de l'actionneur de transfert de couple à une valeur mémorisée caractéristique d'un défaut détecté différent d'une défaillance due à la chaleur. Le moyen de détermination 25 d'une défaillance de l'actionneur de transfert de couple émet en sortie une valeur logique « vrai » si la valeur ETC_state est égale à la valeur mémorisée, sinon une valeur logique « faux » est émise.

Les valeurs logiques émises en sortie du moyen de détermination 22 du mode de conduite actif, du moyen de détermination 23 du mode de conduite requis par le conducteur, du moyen de comparaison 24 de la vitesse du véhicule à une vitesse de seuil et du moyen de détermination 25 d'une défaillance de l'actionneur de transfert de couple sont reliés par leurs sorties à l'opérateur logique 26 de type OU qui émet un signal logique « vrai » si au moins une des valeurs logiques reçues sur ses entrées est une valeur logique « vrai ».

Le commutateur piloté 19 émet en sortie un signal de détection d'un blocage des roues. Le signal de détection d'un blocage des roues est égal au signal logique reçu du premier moyen de détermination 16 si le signal de commande reçu du moyen de détermination 18 porte une valeur logique « vrai », sinon, le signal de détection d'un blocage des roues est égal au signal logique reçu du deuxième moyen de détermination 17.

Le moyen d'estimation 20 du niveau de freinage compare la valeur portée par le signal P_brk reçu des moyens de détermination 1 à une valeur mémorisée Pseuil et émet en sortie une valeur logique « vrai » si la valeur P_brk est supérieure ou égale à la valeur Pseuil, sinon une valeur logique « faux » est émise.

L'opérateur logique 21 de type ET émet en sortie une valeur logique « vrai » si les deux signaux reçus respectivement en provenance du commutateur piloté 19 et du moyen d'estimation 20 du niveau de freinage portent une valeur logique « vrai », sinon un signal portant la valeur logique « faux » est émise.

La sortie 55 de l'opérateur logique 21 de type ET étant confondue avec la sortie du moyen de commande 2, le signal émis par l'opérateur logique 21 de type ET est également le signal émis par le moyen de commande 2. Ce signal correspond à la commande d'antiblocage des roues ABS_in_regulation.

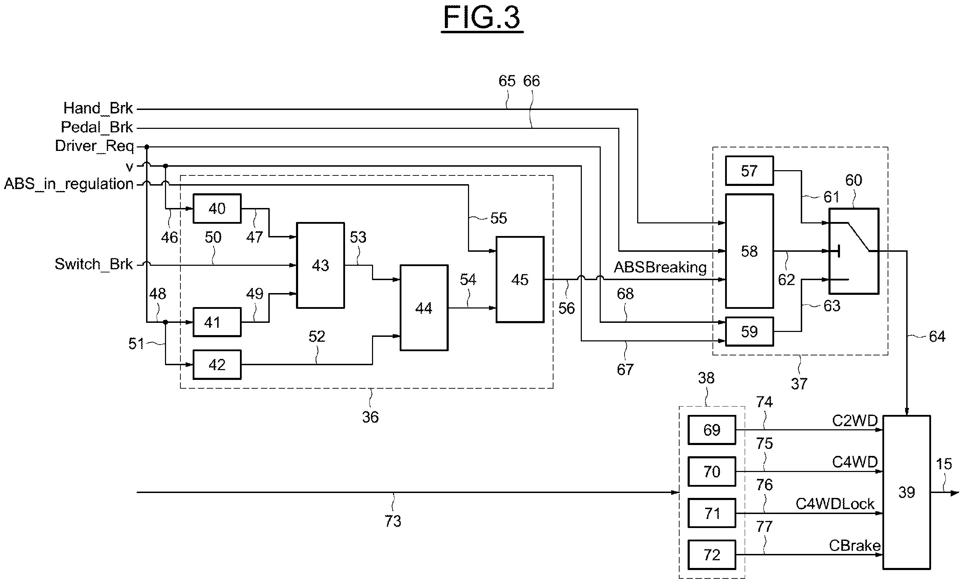

La figure 3 illustre les principaux éléments compris dans le moyen de commande 3 de l'actionneur de transfert de couple parmi lesquels on trouve un moyen de détermination 36 de l'activité du système d'antiblocage des roues, un moyen de commande 37 du mode de conduite, un moyen de détermination 38 des consignes de couple, et un moyen de commutation 39 commandé. D'autres moyens non représentés permettent de déterminer le signal relatif au mode de traction requis par le conducteur Driver_req, le signal relatif au mode de transfert de couple actif ETC_mode, et le signal relatif à l'état de l'actionneur de transfert de couple ETC_state.

Le moyen de détermination 36 de l'activité du système d'antiblocage des roues comprend un moyen de comparaison 40 de la vitesse du véhicule à une vitesse de seuil, un premier moyen de comparaison 41 de la requête de mode de conduite du conducteur et un deuxième moyen de comparaison 42 de la requête de mode de conduite du conducteur, un opérateur logique 43 de type ET, un opérateur logique 44 de type OU et un opérateur logique 45 de type ET.

Le moyen de comparaison 40 de la vitesse du véhicule à une vitesse de seuil est relié en entrée aux moyens de détermination 1 par la connexion 46 et en sortie à l'opérateur logique 43 de type ET par la connexion 47.

Le premier moyen de comparaison 41 de la requête de mode de conduite du conducteur est relié en entrée à l'organe de commande manuelle 4 par la connexion 48 et en sortie à l'opérateur logique 43 de type ET par la connexion 49.

L'opérateur logique 43 de type ET est relié en entrée aux moyens de détermination 1 par une connexion 50 portant un signal de requête d'un freinage Switch_brk, et en sortie à l'opérateur logique 44 de type OU par la connexion 53.

Le deuxième moyen de comparaison 42 de la requête de mode de conduite du conducteur est relié en entrée à l'organe de commande manuelle 4 par la connexion 51 portant le signal relatif au mode de traction requis par le conducteur Driver_req, et en sortie à l'opérateur logique 44 de type OU par la connexion 52.

L'opérateur logique 44 de type OU est relié en sortie par la connexion 54 à l'opérateur logique 45 de type ET.

L'opérateur logique 45 de type ET est également relié en entrée au moyen de commande 2 d'antiblocage des roues par la connexion 55. L'opérateur logique 45 de type ET reçoit la commande d'antiblocage des roues ABS_in_regulation par la connexion 55.

La sortie de l'opérateur logique 45 de type ET est confondue avec la sortie du moyen de détermination 36 de l'activité du système d'antiblocage des roues et est reliée au moyen de commande 37 du mode de conduite par la connexion 56.

Le moyen de détermination 36 de l'activité du système d'antiblocage des roues reçoit par la connexion 46 une valeur v de la vitesse du véhicule. Cette valeur est comparée par le moyen de comparaison 40 de la vitesse à une valeur mémorisée Vseuil. Une valeur logique « vrai » est émise en sortie si la valeur de la vitesse v est supérieure ou égale à la valeur Vseuil, sinon la valeur logique « faux » est émise.

Le moyen de détermination 36 de l'activité du système d'antiblocage des roues reçoit par la connexion 50 une valeur logique provenant des moyens de détermination 1 et portant la valeur « vrai » si la pédale de frein est enfoncée.

La valeur Driver_req est reçue par la connexion 48 du moyen de commande 3 de l'actionneur de transfert de couple. Le premier moyen de comparaison 41 de la requête de mode de conduite du conducteur compare la valeur Driver_req à la valeur 4WDLock mémorisée. Si la comparaison est vérifiée, une valeur logique « vrai » est émise en sortie du premier moyen de comparaison 41, sinon la valeur logique « faux » est émise.

De même, le deuxième moyen de comparaison 42 de la requête de mode de conduite du conducteur compare la valeur Driver_req à la valeur 4WDLock mémorisée. Si la comparaison est vérifiée, une valeur logique « faux » est émise en sortie du deuxième moyen de comparaison 42, sinon une valeur logique « vrai » est émise.

Le signal de requête d'un freinage Switch_brk porté par la connexion 50 en provenance des moyens de détermination est de type logique. Le signal Switch_brk prend la valeur logique « faux » lorsqu'aucune freinage n'est requis, ou si le capteur de détection de freinage n'est pas fiable. Le signal Switch_brk prend la valeur logique « vrai » si un freinage est détecté, quel que soit l'amplitude du freinage requis.

L'opérateur logique 43 de type ET reçoit en entrée les signaux logiques émis par le moyen de comparaison 40 de la vitesse et par le premier moyen de comparaison 41 de la requête de mode de conduite du conducteur et le signal porté par la connexion 50. Si tous ces signaux portent une valeur logique « vrai », l'opérateur logique 43 de type ET émet en sortie une valeur logique « vrai », sinon une valeur logique « faux » est émise.

L'opérateur logique 44 de type OU reçoit en entrée les signaux logiques émis par l'opérateur logique 43 de type ET et par le deuxième moyen de comparaison 42 de la requête de mode de conduite du conducteur. Si au moins un de ces signaux porte une valeur logique « vrai », l'opérateur logique 44 de type OU émet en sortie une valeur logique « vrai », sinon une valeur logique « faux » est émise.

Le moyen de détermination 36 de l'activité du système d'antiblocage des roues reçoit par la connexion 55 la commande d'antiblocage des roues ABS_in_regulation provenant du moyen de commande 2 d'antiblocage des roues.

L'opérateur logique 45 de type ET reçoit en entrée le signal logique émis par l'opérateur logique 44 de type OU et la commande d'antiblocage des roues ABS_in_regulation. Si tous ces signaux portent une valeur logique « vrai », l'opérateur logique 45 de type ET émet en sortie un signal de commande de déclenchement du système d'antiblocage des roues ABSBraking portant une valeur logique « vrai », sinon une valeur logique « faux » est émise.

En d'autres termes, on détermine si le conducteur requiert un mode quatre roues motrices tout terrain (4WDLock) ou non. Si le mode quatre roues motrices tout terrain (4WDLock) est requis, et si la vitesse du véhicule est supérieure ou égale à une vitesse de seuil, et si l'antiblocage des roues est actif, le système d'antiblocage des roues (ABS) est déclenché. De même, si un mode différent du mode quatre roues motrices est requis, et si l'antiblocage des roues est actif, le système d'antiblocage des roues (ABS) est déclenché. Dans les autres cas, le système d'antiblocage des roues (ABS) n'est pas déclenché. Cela est notamment le cas si l'antiblocage des roues est inactif. Le système d'antiblocage des roues (ABS) est déclenché ou non, par l'émission d'un signal de commande de déclenchement du système d'antiblocage des roues ABSBraking en sortie du moyen de détermination 36 de l'activité du système d'antiblocage des roues. Ce signal ABSBraking porte une valeur logique déterminée par l'opérateur logique 45 de type ET.

Le moyen de commande 37 du mode de conduite comprend une mémoire 57, un opérateur logique 58 de type OU, un moyen de détermination 59 du mode de conduite à activer, et un commutateur commandé 60.

Le commutateur commandé 60 est relié en entrée par une connexion 61 à la mémoire 57, et par la connexion 63 au moyen de détermination 59 du mode de conduite à activer. Le commutateur commandé 60 est par ailleurs relié en entrée par sa borne de commande à l'opérateur logique 58 de type OU par la connexion 62.

L'opérateur logique 58 de type OU est relié en entrée au moyen de détermination 36 de l'activité du système d'antiblocage des roues par la connexion 56, portant le signal de commande de déclenchement du système d'antiblocage des roues ABSBraking, et aux moyens de détermination 1 par la connexion 65 et la connexion 66.

Le moyen de détermination 59 du mode de conduite à activer est relié en entrée aux moyens de détermination 1 par la connexion 67, dérivation de la connexion 46, et la connexion 68, dérivation de la connexion 48.

Le commutateur commandé 60 est relié en sortie au moyen de commutation 39 commandé par la connexion 64.

L'opérateur logique 58 de type OU reçoit des moyens de détermination 1 un signal logique d'activation du frein à main Hand_Brk par la connexion 65, et un signal logique d'activation d'enfoncement de la pédale de frein Pedal_Brk par la connexion 66. L'opérateur logique 58 de type OU émet en sortie une valeur logique « vrai » si au moins un des signaux en entrée porte la valeur logique « vrai », sinon une valeur « faux » est émise.

La mémoire 57 émet à destination du commutateur commandé 60 un signal de commande du moyen de commutation 39 apte à provoquer la commutation dudit moyen de commutation 39 de façon que la consigne de couple de freinage soit émise en sortie du moyen de commutation 39.

Le moyen de détermination 59 du mode de conduite à activer reçoit en entrée un signal portant la requête du conducteur Driver_req par la connexion 68, et la vitesse v du véhicule par la connexion 67, et peut recevoir d'autres données, comme par exemple la température extérieure. En sortie, le moyen de détermination 59 du mode de conduite à activer émet un signal de commande à destination du commutateur commandé 60 pour commander le moyen de commutation 39. Ce signal de commande émis par le moyen de détermination 59 est apte à provoquer la commutation dudit moyen de commutation 39 de façon que la consigne de couple correspondant au mode de conduite déterminé par le moyen de détermination 59 du mode de conduite à activer soit appliquée.

Le commutateur commandé 60 transmet le signal reçu de la mémoire 57 à destination du moyen de commutation 39 si le signal logique reçu sur sa borne de commande en provenance de l'opérateur logique 58 de type OU porte la valeur logique « vrai ». Si le signal logique reçu sur la borne de commande en provenance de l'opérateur logique 58 de type OU porte la valeur logique « faux », le signal reçu du moyen de détermination 59 du mode de conduite à activer est transmis à destination du moyen de commutation 39.

Ainsi, le signal de commande de mode émis en sortie du commutateur commandé 60 dépend du signal logique reçu de l'opérateur logique 58 de type OU.

Le moyen de détermination 38 des consignes de couple comprend un moyen de détermination 69 de la consigne de couple en mode deux roues motrices (2WD), un moyen de détermination 70 de la consigne de couple en mode quatre roues motrices (4WD), un moyen de détermination 71 de la consigne de couple en mode quatre roues motrices (4WDLock) tout terrain, et un moyen de détermination 72 de la consigne de couple en mode freinage. Le moyen de détermination 38 des consignes de couple est relié en entrée aux moyens de détermination 1 par la connexion 73.

Le moyen de commutation 39 commandé est relié en entrée au moyen de détermination 69 de la consigne de couple en mode deux roues motrices (2WD) par la connexion 74, au moyen de détermination 70 de la consigne de couple en mode quatre roues motrices (4WD) par la connexion 75, au moyen de détermination 71 de la consigne de couple en mode quatre roues motrices (4WDLock) tout terrain par la connexion 76, et au moyen de détermination 72 de la consigne de couple en mode freinage par la connexion 77. Le moyen de commutation 39 commandé est relié également en entrée au moyen de commande 37 du mode de conduite par sa borne de commande.

Le moyen de commutation 39 commandé est relié en sortie par la connexion 15 à l'actionneur 5 de transfert de couple.

Le moyen de détermination 38 des consignes de couple reçoit sur ses entrées des valeurs provenant des moyens de détermination et caractérisant le comportement du véhicule. En fonction de ces valeurs, le moyen de détermination 69 de la consigne de couple en mode deux roues motrices (2WD) détermine la consigne de couple en mode deux roues motrices C2WD, le moyen de détermination 70 de la consigne de couple en mode quatre roues motrices (4WD) détermine une consigne de couple en mode quatre roues motrices C4WD, le moyen de détermination 71 de la consigne de couple en mode quatre roues motrices (4WDLock) tout terrain détermine la consigne de couple en mode quatre roues motrices C4WDLock tout terrain et le moyen de détermination 72 de la consigne de couple en mode freinage détermine la consigne de couple en mode freinage CBrake. La détermination des différentes consignes est connue de l'homme de métier. Il est à noter que la consigne de couple en mode freinage CBrake peut être une valeur constante, une valeur dépendante de la vitesse du véhicule ou d'autres paramètres.

Le moyen de commutation 39 commandé émet une commande de transfert de couple à l'actionneur 5 de transfert de couple. La commande de transfert de couple est égale à la consigne de couple correspondant au signal reçu du moyen de commande 37 du mode de conduite.

En d'autres termes, si un freinage est détecté, la consigne de couple en mode freinage CBrake est appliquée selon le signal de commande émis par la mémoire 57, sinon le moyen de commutation 39 détermine la consigne de couple à appliquer en fonction du signal de commande émis par le moyen de détermination 59du mode de conduite à activer.

Par ailleurs, le moyen de commande 3 de l'actionneur de transfert de couple est apte à émettre un signal logique de désactivation à destination du moyen de commande 2 d'antiblocage des roues. Ce signal est émis lorsque une situation de croisement de pont est détectée en fonction de la vitesse de chaque roue, du couple moteur et du couple transféré sur l'essieu arrière.

Les conditions de détection d'une situation de croisement de pont sont une somme des vitesses de rotation de deux roues selon une diagonale (par exemple roue avant gauche et roue arrière droite) inférieure à une première valeur de seuil, une somme des vitesses de rotation des deux autres roues supérieure à une deuxième valeur de seuil, et un couple transféré sur l'essieu arrière supérieur à une troisième valeur de seuil.

Si ces trois conditions sont vérifiées pendant une durée supérieure à une durée mémorisée, le signal de désactivation est émis. L'émission du signal est stoppée dès qu'une de ces conditions n'est plus vérifiée.

Une situation de croisement de pont intervient généralement lors du franchissement d'obstacles en mode tout terrain. La désactivation du système d'antiblocage des roues lors du freinage permet d'éviter une oscillation des conditions logiques traitées par le moyen de commande 3 de l'actionneur de transfert de couple, notamment par la commande d'antiblocage des roues ABS_in_regulation provenant du moyen de commande 2 de l'antiblocage des roues par la connexion 55. Une oscillation de la valeur portée par la commande d'antiblocage des roues ABS_in_regulation pouvant alors mener à une oscillation dans le signal de commande reçu par le commutateur commandé 60 qui peut alors générer une oscillation dans la commande de transfert de couple émise par le moyen de commutation 39 commandé à destination de l'actionneur 5 de transfert de couple. Une telle oscillation de la commande de transfert de couple peut être au mieux gênante pour le conducteur, au pire dangereuse pour la sécurité du véhicule.

Le système de commande permet à l'antiblocage des roues et au transfert de couple de coopérer, ce qui permet d'élaborer une consigne de transfert de couple qui n'est pas erronément déterminée en tenant compte d'un déclenchement injustifié de l'antiblocage des roues.

## Revendications

1. Système de commande d'un actionneur (5) de transfert de couple pour un véhicule automobile à quatre roues motrices, comprenant des moyens de détermination (1) et un système d'antiblocage des roues, le système comprenant :
un moyen de commande (2) d'antiblocage des roues et un moyen de commande (3) de l'actionneur de transfert de couple aptes à coopérer afin d'émettre la commande de transfert de couple à destination de l'actionneur (5) de transfert de couple, le moyen de commande (2) d'antiblocage des roues étant apte à déterminer une commande d'antiblocage des roues en fonction de la commande de transfert de couple reçue du moyen de commande (3) de l'actionneur de transfert de couple,
le moyen de commande (3) de l'actionneur de transfert de couple étant apte à déterminer une commande de transfert de couple en fonction de la commande d'antiblocage des roues, **caractérisé en ce que** le système comprend un moyen de détermination (18) de la situation de conduite, apte à émettre un signal de commande à destination d'un commutateur piloté (19) en fonction des signaux reçus des moyens de détermination (1) et de la commande de transfert de couple reçue du moyen de commande (3) de l'actionneur de transfert de couple, le commutateur piloté (19) étant apte à émettre un signal de détection d'un blocage des roues, ainsi qu'un moyen d'estimation (20) du niveau de freinage apte à émettre un signal en fonction du signal de pression dans le circuit de freinage reçu des moyens de détermination (1),
un opérateur logique (21) de type ET étant apte à émettre une commande d'antiblocage des roues relative à l'état de fonctionnement du moyen de commande d'antiblocage des roues, en fonction des signaux reçus du commutateur commandé (19) et du moyen d'estimation (20) du niveau de freinage.

2. Système de commande selon la revendication 1, comprenant un organe de commande manuelle (4) relié au moyen de commande (3) de l'actionneur de transfert de couple, et
l'organe de commande manuelle (4) pouvant prendre plusieurs positions, et être manipulé par le conducteur du véhicule, et étant apte à émettre un signal selon la position choisie par le conducteur.

3. Système de commande selon la revendication 1, comprenant un premier moyen (16) de détection du blocage des roues et un deuxième moyen (17) de détection du blocage des roues chacun relié à une borne du commutateur commandé (19), et apte chacun à déterminer l'existence d'un blocage des roues lors du freinage en fonction des signaux des vitesses de rotation de chaque roue reçus des moyens de détermination (1).

4. Système de commande selon la revendication 1, comprenant un moyen de détermination (36) de l'activité du système d'antiblocage des roues apte à déterminer un signal de commande de déclenchement du système d'antiblocage des roues en fonction des signaux reçus des moyens de détermination et de la commande d'antiblocage des roues reçue du moyen de commande (2) d'antiblocage des roues.

5. Système de commande selon la revendication 4 comprenant un moyen de commande (37) du mode de conduite apte à déterminer le mode de conduite à appliquer à l'actionneur (5) de transfert de couple en fonction du signal d'activation du frein à main (65), du signal d'activation d'enfoncement de la pédale de frein (66), de la vitesse du véhicule (67), de la requête du conducteur 68, signaux reçus des moyens de détermination (1) et du signal de commande de déclenchement du système d'antiblocage des roues reçu du moyen de détermination (36) de l'activité du système d'antiblocage des roues, le moyen de commande (37) du mode de conduite étant apte à émettre un signal de commande de mode.

6. Système de commande selon la revendication 5, comprenant un moyen de détermination (38) des consignes de couple et un moyen de commutation (39), le moyen de détermination (38) des consignes de couple étant apte à déterminer les consignes de couples à appliquer à l'actionneur (5) de transfert de couple pour chaque mode de conduite pouvant être sélectionné par le conducteur ainsi que pour un mode de freinage, le moyen de commutation (39) étant apte à émettre une commande de transfert de couple à destination de l'actionneur (5) de transfert de couple en fonction du signal de commande de mode reçu du moyen de commande (37) du mode de conduite et des signaux reçus du moyen de détermination (38) des consignes de couple.

7. Procédé de commande de transfert de couple pour véhicule automobile à quatre roues motrices avec commande d'antiblocage des roues et commande de transfert de couple, dontla commande d'antiblocage des roues dépend de la commande de transfert de couple, et
la commande de transfert de couple dépend de la commande d'antiblocage des roues, un signal de détection d'un blocage des roues étant déterminé en fonction d'au moins deux modes de détection d'un blocage des roues, et en fonction de la vitesse du véhicule et de la commande de transfert de couple, notamment de la requête de mode de conduite du conducteur, de l'état du système de transfert de couple et du mode de conduite actif dans le système de transfert de couple, ledit procédé étant **caractérisé en ce que** :
- on détermine un signal de détection d'un freinage si la pression du système de freinage est supérieure à une valeur de seuil,
- on détermine la commande d'antiblocage des roues, en fonction du signal de détection d'un blocage des roues et du signal de détection d'un freinage, et
- on détermine un signal de commande de déclenchement du système d'antiblocage des roues en fonction de la vitesse du véhicule, de la commande d'antiblocage des roues, de la requête de mode de conduite du conducteur et d'un signal de requête d'un freinage.

8. Procédé de commande selon la revendication 7, dans lequel la commande d'antiblocage des roues dépend de la commande de transfert de couple, notamment de la requête de mode de conduite du conducteur, de l'état du système de transfert de couple et du mode de conduite actif dans le système de transfert de couple.

9. Procédé de commande selon la revendication 7, dans lequel on choisit un premier mode de détection du blocage des roues si la requête de mode de conduite du conducteur n'est pas tout terrain, ou si le mode de conduite actif dans le système de transfert de couple n'est pas tout terrain, ou si la vitesse du véhicule est supérieure à une valeur de seuil ou si on détecte une défaillance de l'actionneur (5) de transfert de couple autre qu'une défaillance thermique.

10. Procédé de commande selon la revendication 7, dans lequel on choisit un deuxième mode de détection du blocage des roues si le premier mode de détection du blocage des roues n'a pas été activé, le deuxième mode de détection du blocage des roues présente une sensibilité de détection moins élevée que la sensibilité de détection du premier mode de détection du blocage des roues.

11. Procédé de commande selon la revendication 7, dans lequel on détermine une consigne de transfert de couple en mode deux roues motrices, une consigne de transfert de couple en mode quatre roues motrices, une consigne de transfert de couple en mode quatre roue motrices tout terrain et une consigne de transfert de couple en mode de freinage,
on choisit une consigne de transfert de couple en fonction de la vitesse du véhicule, de la requête de mode de conduite du conducteur, de l'enfoncement de la pédale de freinage, de l'activation du frein à main, et d'un signal de commande de déclenchement du système d'antiblocage des roues,et
on émet la commande de transfert de couple en fonction de la consigne de transfert de couple choisie.

## Patentansprüche

1. System zur Steuerung einer Drehmomentkupplung (5) für ein Kraftfahrzeug mit vier Antriebsrädern, umfassend Bestimmungsmittel (1) und ein Antiblockiersystem der Räder, wobei das System umfasst:
ein Antiblockiersteuerungsmittel (2) der Räder und ein Steuermittel (3) der Drehmomentkupplung, die geeignet sind zusammenzuwirken, um die Steuerung einer Drehmomentübertragung in Richtung der Drehmomentkupplung (5) zu entsenden, wobei das Antiblockiersteuerungsmittel (2) der Räder geeignet ist, eine Antiblockiersteuerung der Räder in Abhängigkeit von der Steuerung einer Drehmomentübertragung, die von dem Steuerungsmittel (3) der Drehmomentkupplung empfangen wird, zu bestimmen,
wobei das Steuerungselement (3) der Drehmomentkupplung geeignet ist, eine Steuerung einer Drehmomentübertragung in Abhängigkeit von der Antiblockiersteuerung der Räder zu bestimmen, **dadurch gekennzeichnet, dass** das System ein Mittel (18) zur Bestimmung der Fahrsituation umfasst, das geeignet ist, ein Steuerungssignal in Richtung eines gesteuerten Umschalters (19) in Abhängigkeit von den Signalen, die von den Bestimmungsmitteln (1) empfangen werden, und von der Steuerung einer Drehmomentübertragung, die von dem Steuerungsmittel (3) der Drehmomentkupplung empfangen wird, zu entsenden, wobei der gesteuerte Umschalter (19) geeignet ist, ein Erkennungssignal eines Blockierens der Räder zu entsenden, sowie ein Mittel (20) zur Beurteilung des Bremsniveaus umfasst, das geeignet ist, ein Signal in Abhängigkeit von dem Drucksignal in dem Bremskreis, das von den Bestimmungsmitteln (1) empfangen wird, zu entsenden,
wobei ein logischer Operator (21) des Typs ET geeignet ist, eine Antiblockiersteuerung der Räder in Zusammenhang mit dem Funktionszustand des Antiblockiersteuerungsmittels der Räder in Abhängigkeit von den Signalen, die von dem gesteuerten Umschalter (19) und dem Mittel (20) zur Beurteilung des Bremsniveaus empfangen werden, zu entsenden.

2. Steuerungssystem nach Anspruch 1, umfassend ein manuelles Steuerungselement (4), das mit dem Steuerungsmittel (3) der Drehmomentkupplung verbunden ist, und
wobei das manuelle Steuerungselement (4) mehrere Positionen einnehmen kann und von dem Fahrer des Fahrzeugs betätigt wird und geeignet ist, ein Signal je nach der vom Fahrer ausgewählten Position zu entsenden.

3. Steuerungssystem nach Anspruch 1, umfassend ein erstes Erkennungsmittel (16) des Blockierens der Räder und ein zweites Erkennungsmittel (17) des Blockierens der Räder, die jeweils an eine Klemme des gesteuerten Umschalters (19) angeschlossen und jeweils geeignet sind, das Bestehen eines Blockierens der Räder beim Bremsen in Abhängigkeit von den Drehgeschwindigkeitssignalen jedes Rades, die von den Bestimmungsmitteln (1) empfangen werden, zu bestimmen.

4. Steuerungssystem nach Anspruch 1, umfassend ein Mittel (36) zur Bestimmung der Aktivität des Antiblockiersystems der Räder, das geeignet ist, ein Signal zur Steuerung des Auslösens des Antiblockiersystems der Räder in Abhängigkeit von den Signalen, die von den Bestimmungsmitteln empfangen werden, und der Antiblockiersteuerung der Räder, die von dem Antiblockiersteuerungsmittel (2) der Räder empfangen wird, zu bestimmen.

5. Steuerungssystem nach Anspruch 4, umfassend ein Steuerungsmittel (37) des Fahrmodus, das geeignet ist, den Fahrmodus, der an die Drehmomentkupplung (5) anzulegen ist, in Abhängigkeit von dem Aktivierungssignal der Handbremse (65), dem Aktivierungssignal des Tretens des Bremspedals (66), der Geschwindigkeit des Fahrzeugs (67), der Forderung des Fahrers (68), Signalen, die von den Bestimmungsmitteln (1) empfangen werden, und von dem Signal zur Steuerung des Auslösens des Antiblockiersystems der Räder, das von dem Mittel (36) zur Bestimmung der Aktivität des Antiblockiersystems der Räder empfangen wird, zu bestimmen, wobei das Steuerungsmittel (37) des Fahrmodus geeignet ist, ein Signal zur Modussteuerung zu entsenden.

6. Steuerungssystem nach Anspruch 5, umfassend ein Mittel (38) zur Bestimmung der Drehmomentsollwerte und ein Umschaltmittel (39), wobei das Mittel zur Bestimmung (38) der Drehmomentsollwerte geeignet ist, die Drehmomentsollwerte zu bestimmen, die an die Drehmomentkupplung (5) für jeden Fahrmodus, der vom Fahrer gewählt werden kann, sowie für einen Bremsmodus anzulegen sind, wobei das Umschaltmittel (39) geeignet ist, eine Steuerung einer Drehmomentübertragung in Richtung der Drehmomentkupplung (5) in Abhängigkeit von dem Modussteuerungssignal, das von dem Steuerungsmittel (37) des Fahrmodus empfangen wird, und von den Signalen, die von dem Mittel (38) zur Bestimmung der Drehmomentsollwerte empfangen werden, zu entsenden.

7. Verfahren zur Steuerung einer Drehmomentübertragung für ein Kraftfahrzeug mit vier Antriebsrädern mit einer Antiblockiersteuerung der Räder und einer Drehmomentübertragungssteuerung, wobei die Antiblockiersteuerung der Räder von der Drehmomentübertragungssteuerung abhängt, und
die Drehmomentübertragungssteuerung von der Antiblockiersteuerung der Räder abhängt, wobei ein Erkennungssignal eines Blockierens der Räder in Abhängigkeit von mindestens zwei Erkennungsmodi eines Blockierens der Räder und in Abhängigkeit von der Geschwindigkeit des Fahrzeugs und von der Drehmomentübertragungssteuerung, insbesondere der Forderung des Fahrers nach einem Fahrmodus, dem Zustand der Drehmomentkupplung und dem aktiven Fahrmodus in der Drehmomentkupplung bestimmt wird, wobei das Verfahren **dadurch gekennzeichnet ist, dass**:
- ein Erkennungssignal eines Bremsens bestimmt wird, wenn der Druck des Bremssystems höher als ein Schwellenwert ist,
- die Antiblockiersteuerung der Räder in Abhängigkeit von dem Erkennungssignal eines Blockierens der Räder und von dem Erkennungssignal eines Bremsens bestimmt wird, und
- ein Signal zur Steuerung einer Auslösung des Antiblockiersystems der Räder in Abhängigkeit von der Geschwindigkeit des Fahrzeugs, der Antiblockiersteuerung der Räder, der Forderung des Fahrers nach einem Fahrmodus, und einem Bremsforderungssignal bestimmt wird.

8. Steuerungsverfahren nach Anspruch 7, bei dem die Antiblockiersteuerung der Räder von der Drehmomentübertragungssteuerung, insbesondere von der Forderung des Fahrers nach einem Fahrmodus, von dem Zustand der Drehmomentkupplung und dem aktiven Fahrmodus in der Drehmomentkupplung abhängt.

9. Steuerungsverfahren nach Anspruch 7, bei dem ein erster Erkennungsmodus des Blockierens der Räder ausgewählt wird, wenn die Forderung des Fahrers nach einem Fahrmodus nicht Geländemodus ist, oder wenn der aktive Fahrmodus in der Drehmomentkupplung nicht Geländemodus ist, oder wenn die Geschwindigkeit des Fahrzeugs höher als ein Schwellenwert ist, oder wenn ein anderer Ausfall der Drehmomentkupplung (5) als ein thermischer Ausfall erkannt wird.

10. Steuerungsverfahren nach Anspruch 7, bei dem ein zweiter Erkennungsmodus des Blockierens der Räder ausgewählt wird, wenn der erste Erkennungsmodus des Blockierens der Räder nicht aktiviert wurde, wobei der zweite Erkennungsmodus des Blockierens der Räder eine weniger große Erkennungsempfindlichkeit als die Erkennungsempfindlichkeit des ersten Erkennungsmodus des Blockierens der Räder aufweist.

11. Steuerungsverfahren nach Anspruch 7, bei dem ein Drehmomentübertragungssollwert im Zweiradantriebsmodus, ein Drehmomentübertragungssollwert im Vierradantrieb, ein Drehmomentübertragungssollwert im Gelände-Vierradantrieb und ein Drehmomentübertragungssollwert im Bremsmodus bestimmt wird,
ein Drehmomentübertragungssollwert in Abhängigkeit von der Geschwindigkeit des Fahrzeugs, der Forderung des Fahrers nach einem Fahrmodus, dem Treten des Bremspedals, der Aktivierung der Handbremse und einem Steuerungssignal eines Auslösens des Antiblockiersystems der Räder ausgewählt wird, und
die Drehmomentübertragungssteuerung in Abhängigkeit von dem ausgewählten Drehmomentübertragungssollwert entsandt wird.

## Claims

1. System for controlling a torque transfer actuator (5) for a four-wheel drive motor vehicle, comprising determination means (1) and a wheel antilock system, the system comprising:
a wheel antilock control means (2) and a control means (3) of the torque transfer actuator, which are able to cooperate in order to emit the torque transfer command to the torque transfer actuator (5), the wheel antilock control means (2) being able to determine a wheel antilock command as a function of the torque transfer command received from the control means (3) of the torque transfer actuator,
the control means (3) of the torque transfer actuator being able to determine a torque transfer command as a function of the wheel antilock command, **characterized in that** the system comprises a means (18) for determining the driving situation, able to emit a control signal to a driven switch (19) as a function of the signals received from the determination means (1) and the torque transfer command received from the control means (3) of the torque transfer actuator, and the driven switch (19) being able to emit a wheel lock detection signal, and a means (20) for estimating the level of braking able to emit a signal as a function of the pressure signal in the brake circuit, which is received from the determination means (1),
a logical operator (21) of the AND type being able to emit a wheel antilock command relating to the operational state of the wheel antilock control means, as a function of the signals received from the controlled switch (19) and from the means (20) for estimating the level of braking.

2. Control system according to Claim 1, comprising a manual control component (4) connected to the control means (3) of the torque transfer actuator, and
the manual control component (4) being able to occupy a plurality of positions and to be manipulated by the driver of the vehicle, and being able to emit a signal according to the position selected by the driver.

3. Control system according to Claim 1, comprising a first wheel lock detection means (16) and a second wheel lock detection means (17), each connected to a terminal of the controlled switch (19) and each able to determine the existence of a wheel lock during braking as a function of the rotation speed signals of each wheel which are received from the determination means (1) .

4. Control system according to Claim 1, comprising a means (36) for determining the activity of the wheel antilock system, which is able to determine a control signal for triggering the wheel antilock system as a function of the signals received from the determination means and the wheel antilock command received from the wheel antilock control means (2).

5. Control system according to Claim 4, comprising a driving mode control means (37) able to determine the driving mode to be applied to the torque transfer actuator (5) as a function of the activation signal of the handbrake (65), the signal of the depression of the brake pedal (65), activation of the speed of the vehicle (67), of the request of the driver 68, which signals are received from the determination means (1), and the control signal for triggering the wheel antilock system received from the means (36) for determining the activity of the wheel antilock system, the driving mode control means (37) being able to emit a mode control signal.

6. Control system according to Claim 5, comprising a torque setpoint determination means (38) and a switching means (39), the torque setpoint determination means being able to determine the torque setpoints to be applied to the torque transfer actuator (5) for each driving mode selectable by the driver, as well as for a braking mode, the switching means (39) being able to emit a torque transfer command to the torque transfer actuator (5) as a function of the mode control signal received from the driving mode control means (37) and the signals received from the torque setpoint determination means (38).

7. Torque transfer control method for a four-wheel drive motor vehicle having wheel antilock control and torque transfer control, in which
the wheel antilock command depends on the torque transfer command, and the torque transfer command depends on the wheel antilock command a wheel lock detection signal being determined as a function of at least two wheel lock detection modes and as a function of the speed of the vehicle and the torque transfer command, in particular the driving mode request of the driver, the status of the torque transfer system and the driving mode active in the torque transfer system, said method being **characterized in that**:
- a braking detection signal is determined if the pressure of the brake system is greater than a threshold value,
- the wheel antilock command is determined as a function of the wheel lock detection signal and the braking detection signal, and
- a control signal for triggering the wheel antilock system is determined as a function of the speed of the vehicle, the wheel antilock command, the driving mode request of the driver and a braking request signal.

8. Control method according to Claim 7, wherein the wheel antilock command depends on the torque transfer command, in particular on the driving mode request of the driver, the status of the torque transfer system and the driving mode active in the torque transfer system.

9. Control method according to Claim 7, wherein a first wheel lock detection mode is selected if the driving mode request of the driver is not all-terrain, if the driving mode active in the torque transfer system is not all-terrain, if the speed of the vehicle is greater than a threshold value or if a malfunction of the torque transfer actuator (5) other than a thermal malfunction is detected.

10. Control method according to Claim 7, wherein a second wheel lock detection mode is selected if the first wheel lock detection mode has not been activated, the second wheel lock detection mode having a lower detection sensitivity than the detection sensitivity of the first wheel lock detection mode.

11. Control method according to Claim 7, wherein
a torque transfer setpoint in two-wheel drive mode, a torque transfer setpoint in four-wheel drive mode, a torque transfer setpoint in all-terrain four-wheel drive mode and a torque transfer setpoint in braking mode are determined,
a torque transfer setpoint is selected as a function of the speed of the vehicle, the driving mode request of the driver, depression of the brake pedal, activation of the handbrake and a control signal for triggering the wheel antilock system, and
the torque transfer command is emitted as a function of the torque transfer setpoint selected.
